# EUROPEAN PATENT APPLICATION

(11) **EP 4 560 727 A1**
(43) Date of publication of application: **28.05.2025**
(21) Application number: 24204022.8
(22) Date of filing: 01.10.2024
(51) Int. Cl.: H01M 4/36, H01M 4/38, H01M 4/587, H01M 10/0525, H01M 4/62, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 23.11.2023 KR 20230164922
(71) Applicant: SAMSUNG SDI CO., LTD., Yongin-si, Gyeonggi-do 17084 (KR)
(72) Inventor: KIM, Minjun, 17084 Yongin-si (KR); HONG, Minyoung, 17084 Yongin-si (KR); AN, Hoyong, 17084 Yongin-si (KR); KIM, Beom Kwon, 17084 Yongin-si (KR); JO, Gurnyoung, 17084 Yongin-si (KR); KIM, Soochan, 17084 Yongin-si (KR); JUNG, Hyeseung, 17084 Yongin-si (KR)
(74) Representative: Marks & Clerk LLP

(57) **Abstract**

Examples of the disclosure include a negative electrode for a rechargeable lithium battery and a rechargeable lithium battery including the same. The negative electrode for the rechargeable lithium battery includes a current collector and a negative electrode active material layer on the current collector, the negative electrode including a negative electrode active material and an additive in which a cellulose-based compound chemically bonds with a compound with an amine group and an OH group via the amine group.

## Description

### BACKGROUND

### (a) Field

Embodiments relates to a negative electrode for a rechargeable lithium battery and a rechargeable lithium battery including the same.

### (b) Description of the Related Art

Recently, the rapid growth of electronic devices such as mobile phones, laptop computers, and electric vehicles using batteries may typically require substantial increases in demand for rechargeable batteries with relatively high energy density and high capacity. Research and development for improving performance of rechargeable lithium batteries are actively pursued.

A rechargeable lithium battery typically includes a positive electrode and a negative electrode, the negative electrode including active material being capable of intercalating and deintercalating lithium ions, and an electrolyte between the positive electrode and the negative electrode. The rechargeable lithium battery generates electrical energy due to the oxidation and reduction reaction when lithium ions are intercalated and deintercalated into the positive electrode and the negative electrode.

### SUMMARY

One or more example embodiments of the current disclosure provide an electrode for a rechargeable lithium battery exhibiting improved adhesion and improved cycle-life characteristic.

Another example embodiment provides a rechargeable lithium battery including the negative electrode.

One or more example embodiments provide a negative electrode for a rechargeable lithium battery including a current collector; a negative electrode active material layer on the current collector, including a negative electrode active material, and an additive in which a cellulose-based compound chemically bonds to a compound with an amine group and an OH group via the amine group.

Another example embodiment provides a rechargeable lithium battery including the negative electrode, a positive electrode, and an electrolyte.

At least some of the above and other features of the invention are set out in the claims.

A negative electrode for a rechargeable lithium battery according to example embodiments may exhibit improved cycle-life characteristic.

### BRIEF DESCRIPTION OF THE DRAWINGS

FIG. 1 to FIG. 4 are schematic views illustrating a rechargeable lithium battery according to one or more example embodiments.
FIG. 5 is a Fourier Transform - Infrared (FT-IR) graph of carboxymethyl cellulose.
FIG. 6 is a FT-IR graph of the additive prepared in Example 1.

### DETAILED DESCRIPTION

Hereinafter, example embodiments are described in detail. However, these embodiments are examples, the present disclosure is not limited thereto and the present disclosure is defined by the scope of the claims.

As used herein, when a definition is not otherwise provided, it will be understood that when an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B".

As used herein, the term "combination thereof may include a mixture, a laminate, a complex, a copolymer, an alloy, a blend, a reactant of constituents.

As used herein, when a definition is not otherwise provided, a particle diameter may be an average particle diameter. Such a particle diameter indicates an average particle diameter (D50) where a cumulative volume is about 50 volume% in a particle size distribution. The particle size (D50) may be measured by any suitable method, for example, by a particle size analyzer, or by a transmission electron microscopic image, or a scanning electron microscopic image. In example embodiments, a dynamic light-scattering measurement device is used to perform a data analysis, and the number of particles is counted for each particle size range, or for a majority of the particle size ranges, and from this, the average particle diameter (D50) value may be obtained through a calculation. The particle size may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50% standard of particle distribution in the measuring device.

When the terms "about" or "substantially" are used in this specification in connection with a numerical value, it is intended that the associated numerical value include a tolerance of ±10% around the stated numerical value. Moreover, when reference is made to percentages in this specification, it is intended that those percentages are based on weight, e.g., weight percentages. The expression "up to" includes amounts of zero to the expressed upper limit and all values therebetween. When ranges are specified, the range includes all values therebetween such as increments of 0.1%. Moreover, when the words "generally" and "substantially" are used in connection with geometric shapes, it is intended that precision of the geometric shape is not required but that latitude for the shape is within the scope of the disclosure. Although the tubular elements of the embodiments may be cylindrical, other tubular cross-sectional forms are contemplated, such as square, rectangular, oval, triangular and others.

In example embodiments, an average particle diameter may be measured by various techniques, and for example, may be measured by a particle analyzer.

As used herein, soft carbon refers to graphitizable carbon materials and are readily graphitized by heat treatment at a high temperature, e.g., about 2800 °C, and hard carbon refers to non-graphitizable carbon materials and are substantially and slightly graphitized by heat treatment. The terms soft carbon and hard carbon may be known in the related arts.

A negative electrode for a rechargeable lithium battery according to example embodiments includes a current collector and a negative electrode active material layer on the current collector. The negative electrode active material layer includes a negative electrode active material, and an additive in which a cellulose-based compound chemically bonds to a compound with an amine group and an OH group via the amine group.

The additive may be or include a chemically bonded compound of the cellulose-based compound and the compound with the amine group and the OH group via the amine group, which is different from separately including the cellulose-based compound and the compound with the amine group and the OH group.

In the negative electrode according to example embodiments, it may be determined by measuring a FT-IR that the additive, in which the cellulose-based compound and the compound with the amine group and the OH group are chemically bonded via the amine group, is present. For example, in the FT-IR measurement for the additive, the additive may have a first peak appearing at a wavelength of about 1,250 cm⁻¹ to about 1,350 cm⁻¹, and a second peak appearing at a wavelength of about 1,470 cm⁻¹ to about 1,570 cm⁻¹. In example embodiments, the FT-IR measurement for the negative electrode including the additive may exhibit a first peak appearing at a wavelength of about 1,250 cm⁻¹ to about 1,350 cm⁻¹ and a second peak appearing at a wavelength of about 1,470 cm⁻¹ to about 1, 570 cm⁻¹.

If the cellulose-based compound, and the compound with the amine group and the OH group are separately presented, for example, in the form of the physical mixture, no peak may appear in the FT-IR measurement.

If the cellulose-based compound, and the compound with the amine group and the OH group, are chemically bonded via the amine group to be included in the negative electrode active material layer, the cellulose-based compound, and the compound with the amine group and the OH group are firmly bonded, and may be included in the negative electrode active material layer.

In example embodiments, the compound with the amine group and the OH group includes the OH group together with the amine group, and the cellulose-based compound chemically bonds to the compound with the OH group via the amine group.

The cellulose-based compound of the additive may be adsorbed through a hydrophobic interaction, and the cellulose-based compound may chemically bond to the compound with the OH group, thereby enhancing the bonding between the negative electrode active materials. The compound with the amine group and the OH group is included in the additive, so that the additive includes the amine group and part of the amine group may bond to the current collector, thereby enhancing the adhesion of the negative electrode active material to the current collector through the additive.

In example embodiments, the compound with the amine group and the OH group (hereinafter, referred as "OH group-including compound") may be or include a compound with the OH group together with the amine group, and may be or include dopamine, norepinephrine, serotonin, or a combination thereof.

In one or more example embodiments, a mixing ratio of the cellulose-based compound and the OH group-includingt compound may be about 9:1 to about 5:5 by weight ratio, about 8:2 to about 5:5 by weight ratio, or about 8:2 to about 6:4 by weight ratio. For example, if the mixing ratio of the cellulose-based compound and the OH-including compound is within the range, the OH group via the amine group may be bonded to the cellulose-based compound in sufficient amount to enhance adhesion, thereby significantly improving the adhesion between the active materials, and the adhesion between the active material and the current collector. This improved adhesion may improve the cycle-life characteristic of the battery.

In example embodiments, an amount of the cellulose-based compound may be, based on 100 wt% of the negative electrode active material layer, about 0.5 wt% to about 1.5 wt%, about 0.7 wt% to about 1.5 wt%, or about 1 wt% to about 1.5 wt%. For example, if the amount of the cellulose-based compound is within the range, sufficient adhesion between the negative electrode active materials may be achieved.

An amount of the OH group-including compound may be, based on 100 wt% of the negative electrode active material layer, about 0.1 wt% to about 1 wt%, about 0.3 wt% to about 1 wt%, or about 0.5 wt% to about 1 wt%. For example, if the OH group-including compound satisfies any one of the above ranges, sufficient adhesion between the negative electrode active materials may be achieved.

In example embodiments, an amount of the additive may be appropriately obtained from the amount of the cellulose-based compound and the amount of the OH group-including compound.

In example embodiments, the cellulose-based compound includes one or more of carboxymethyl cellulose, hydroxypropylmethyl cellulose, methyl cellulose, alkali metal salts thereof, or a combination thereof. The alkali metal may be or include Na, K, or Li.

In example embodiments, the negative electrode active material layer may further include polydopamine, polynorepinephrine, polyserotonin, or a combination thereof.

In example embodiments, the negative electrode active material may include a composite of silicon and carbon, e.g., a silicon-carbon composite. The carbon may include amorphous carbon, or amorphous carbon and crystalline carbon.

The silicon-carbon composite may be or include in a form of silicon particles and amorphous carbon coated on the surface of the silicon particles. For example, the silicon-carbon composite may include silicon particles and an amorphous carbon coating layer on a surface of the silicon particles. In example embodiments, the silicon-carbon composite may include a secondary particle (core) where primary silicon particles are agglomerated, and an amorphous carbon coating layer (shell) on the surface of the secondary particle. The amorphous carbon may also be between the primary silicon particles, and, for example, the primary silicon particles may be coated with the amorphous carbon. For example, the secondary particle may exist dispersed in an amorphous carbon matrix. The silicon particle may be or include nano silicon particles. In one or more embodiments, a particle diameter of the nano silicon particle may be about 10 nm to about 900 nm, about 10 nm to about 800 nm, about 10 nm to about 500 nm, about 10 nm to about 300 nm, or about 10 nm to about 150 nm. If the average particle diameter of the nano silicon particles is within the range, the extreme volume expansion caused during charge and discharge may be reduced or suppressed, and a breakage of the conductive path due to crushing of particles may be reduced or prevented. In example embodiments, the particle diameter of the silicon secondary particle is not necessary to be limited.

The amorphous carbon may be or include a soft carbon, a hard carbon, a mesophase pitch carbonization product, calcined coke, and the like.

A thickness of the amorphous carbon coating layer may be appropriately adjusted, but, for example, may be about 2 nm to about 800 nm, about 5 nm to about 600 nm, about 10 nm to about 400 nm, or about 20 nm to about 200 nm. A thickness of the amorphous carbon coating layer may be measured from a Scanning Electron Microscope (SEM) image or a Transmission Electron Microscope (TEM) image for the cross-section of the silicon-carbon composite, but is not limited thereto. The thickness of the amorphous carbon coating layer may be measured by any techniques which may measure the thickness of the amorphous carbon coating layer in the related arts.

In various examples of the disclosure, the particle diameter of the silicon-carbon composite may be appropriately adjusted to, for example, about 30 µm or less, for another example, about 1 µm to about 30 µm, about 2 µm to about 25 µm, about 3 µm to about 20 µm, or about 5 µm to about 15 µm.

In the example silicon composite, based on 100 wt% of the silicon-carbon composite, an amount of the silicon particle may be about 30 wt% to about 70 wt%, or about 40 wt% to about 65 wt%. An amount of the amorphous carbon may be, based on 100 wt% of the silicon-carbon composite, about 30 wt% to about 70 wt%, or about 35 wt% to about 60 wt%. If the amounts of the silicon particles and the amorphous carbon are within any one of the above ranges, more high-capacity may be realized.

In the example silicon-carbon composite, the carbon may include amorphous carbon and crystalline carbon. In example embodiments, the silicon-carbon composite may include a core including silicon particles and crystalline carbon, and an amorphous carbon coating layer on the surface of the core. For example, the silicon-carbon composite may include a core including secondary particles where silicon primary particles and crystalline carbon are agglomerated and an amorphous carbon coating layer on the core. The amorphous carbon may be positioned between the silicon primary particles, or may be positioned between the crystalline carbons, thereby filling the amorphous carbon between the silicon primary particles or the crystalline carbons.

The crystalline carbon may be or include unspecified shaped, sheet shaped, flake shaped, spherical shaped, fiber shaped natural graphite or artificial graphite, natural graphite, artificial graphite, or a combination thereof.

An amount of the crystalline carbon may be, amongst a total of 100 wt% of the silicon particles, the amorphous carbon, and the crystalline carbon, about 1 wt% to about 20 wt%, and, for example, about 3 wt% to about 17 wt%, or about 5 wt% to about 15 wt%. If the crystalline carbon is included at any one of the above ranges, the conductivity may be improved.

In example embodiments, an amount of the negative electrode active material may be, based on 100 wt% of the negative electrode active material layer, about 97.5 wt% to about 99.4 wt%, about 97.5 wt% to about 99 wt%, or about 98 wt% to about 99 wt%.

The negative electrode active material layer according to example embodiments may include the silicon-carbon composite as a first negative electrode active material and crystalline carbon as a second negative electrode active material. A mixing ratio of the first negative electrode active material and the second negative electrode active material may be about 50:50 to about 5:95 by weight ratio, about 40:60 to about 5:95 by weight ratio, or about 20:80 to about 10:90 by weight ratio.

The crystalline carbon may have unspecified shaped, sheet shaped, flake shaped, spherical shaped, or fiber shaped natural graphite or artificial graphite, natural graphite, artificial graphite, or a combination thereof. In example embodiments, the crystalline carbon may be or include a combination of natural graphite and artificial graphite.

The negative electrode active material layer according to example embodiments may further include an aqueous binder.

The aqueous binder may include a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, or a combination thereof.

An amount of the aqueous binder may be about 0.5 wt% to about 5 wt% based on 100 wt% of the negative electrode active material layer.

The negative electrode active material layer according to example embodiments may further include a conductive material.

The conductive material may be included to provide conductivity to the negative electrode, and any electrically conductive material may be used as a conductive material unless the electrically conductive material causes a chemical change. Examples of the conductive material may be or include a carbon-based material such as natural graphite, artificial graphite, carbon black, acetylene black, ketjen black, a carbon fiber, a carbon nanofiber, carbon nanotube, or the like; a metal-based material of a metal powder or a metal fiber including copper, nickel, aluminium, silver, and the like; a conductive polymer such as a polyphenylene derivative; or a mixture thereof.

If the negative electrode active material layer further includes an aqueous binder and a conductive material, an amount of the additive may be about 0.6 wt% to about 2.5 wt%, an amount of the negative electrode active material may be about 90 wt% to about 95 wt%, an amount of the aqueous binder may be about 1 wt% to about 5 wt%, and an amount of the conductive material may be about 1 wt% to about 5 wt%.

The current collector may include one selected from a copper foil, a nickel foil, a stainless steel foil, a titanium foil, a nickel foam, a copper foam, a polymer substrate coated with a conductive metal, and a combination thereof, but is not limited thereto.

### <Method of preparing negative electrode >

In various examples, a cellulose-based compound and a OH group-including compound are mixed in an aqueous solvent and agitated to prepare an aqueous solution including an additive. The aqueous solvent may be or include water.

In example embodiments, the OH group-including compound is a compound with the OH group together with the amine group.

In the mixing and agitating, the cellulose-based compound bonds to the amine group of the OH group-including compound, so that an additive in which the cellulose-based compound chemically bonds to the OH group-including compound via the amine group, may be prepared. A polymerization reaction of the OH group-including compound may occur spontaneously to prepare a polymer of the OH group-including compound, for example, polydopamine, polynorepinephrine, or polyserotonin. In mixing and agitating, the generation of polydopamine or polynorepinephrine may be confirmed by the color of the mixture being black.

A mixing ratio of the cellulose-based compound and the OH-including compound is as described above.

The agitation time may be appropriately adjusted depending on the temperature, and, for example, as the temperature increases, the agitation may be carried out for a shorter time.

A negative electrode active material, an aqueous binder, and optionally, a conductive agent may be added to the aqueous solution including the additive to prepare a negative electrode active material layer composition. When the cellulose-based compound and the compound with the amine group and the OH group are mixed in the solvent (i.e. not in accordance with embodiments of the present disclosure), together with the negative electrode active material, the aqueous binder, and optionally, the conductive agent, the bonding of the cellulose-based compound and the OH group-including compound may not readily occur.

The negative electrode active material composition is coated on a current collector, dried, and pressurized to prepare a negative electrode.

### <Rechargeable lithium battery>

Another example embodiment provides a rechargeable lithium battery including a negative electrode, a positive electrode, and an electrolyte.

### [Positive electrode]

The positive electrode may include a current collector and a positive electrode active material layer on the current collector. The positive electrode active material layer may include a positive electrode active material and may further include a binder and/or a conductive material.

For example, the positive electrode may further include an additive that can serve as a sacrificial positive electrode.

An amount of the positive electrode active material may be about 90 wt% to about 99.5 wt% based on 100 wt% of the positive electrode active material layer, and amounts of the binder and the conductive material may be about 0.5 wt% to about 5 wt%, respectively, based on 100 wt% of the positive electrode active material layer.

The positive electrode active material may include lithiated intercalation compounds that reversibly intercalate and deintercalate lithium ions. In example embodiments, at least one of a composite oxide of lithium and a metal selected from cobalt, manganese, nickel, and combinations thereof may be used.

The composite oxide may be or include a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following chemical formulas may be used. LiₐA_{1-b}X_{b}O_{2-c}O_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be or include a high nickel-based positive electrode active material having a nickel amount greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material discussed above may realize high capacity and may be applied to a high-capacity, high-density rechargeable lithium battery.

The binder may improve binding properties of positive electrode active material particles with one another and with a current collector. Examples of the binder may be or include polyvinyl alcohol, carboxymethyl cellulose, hydroxypropyl cellulose, diacetylcellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, (meth)acrylated styrene-butadiene rubber, an epoxy resin, a (meth)acrylic resin, a polyester resin, nylon, or the like, but is not limited thereto.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, carbon nanotubes, or the like; a metal-based material of a metal powder or a metal fiber including copper, nickel, aluminium, silver, or the like; a conductive polymer such as a polyphenylene derivative; or a mixture thereof.

The current collector may include aluminium (Al), but is not limited thereto.

### [Electrolyte]

The electrolyte may include a non-aqueous organic solvent and a lithium salt.

The non-aqueous organic solvent may be a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

The ester-based solvent may include methyl acetate, ethyl acetate, n-propyl acetate, dimethyl acetate, methyl propionate, ethyl propionate, decanolide, mevalonolactone, valerolactone, caprolactone, or the like.

The ether-based solvent may include dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

In various examples, the non-aqueous organic solvents discussed above may be used alone or in combination of two or more.

If using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, may enable, or contribute to, the basic operation of a rechargeable lithium battery, and may improve transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), wherein x and y are integers of 1 to 20, lithium trifluoromethane sulfonate, lithium tetrafluoroethanesulfonate, lithium difluorobis(oxalato)phosphate (LiDFBOP), lithium bis(oxalato)borate (LiBOB).

### [Separator]

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a combination thereof, but is not limited thereto.

The organic material and the inorganic material discussed above may be mixed in one coating layer, or a coating layer including the organic material and a coating layer including the inorganic material may be stacked.

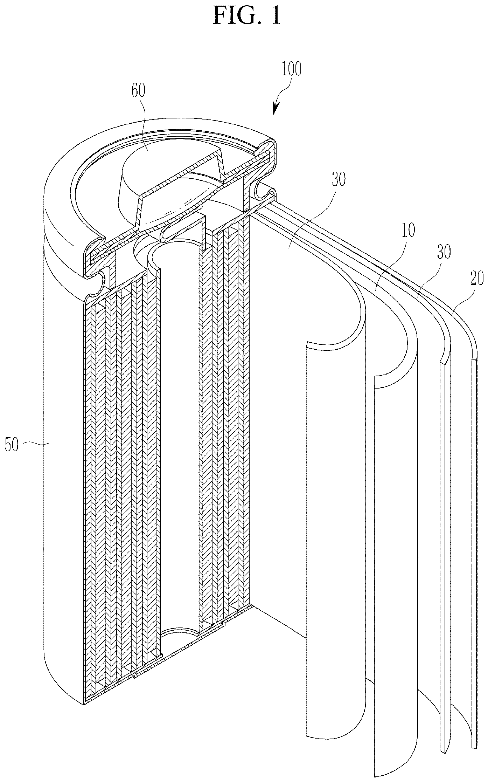

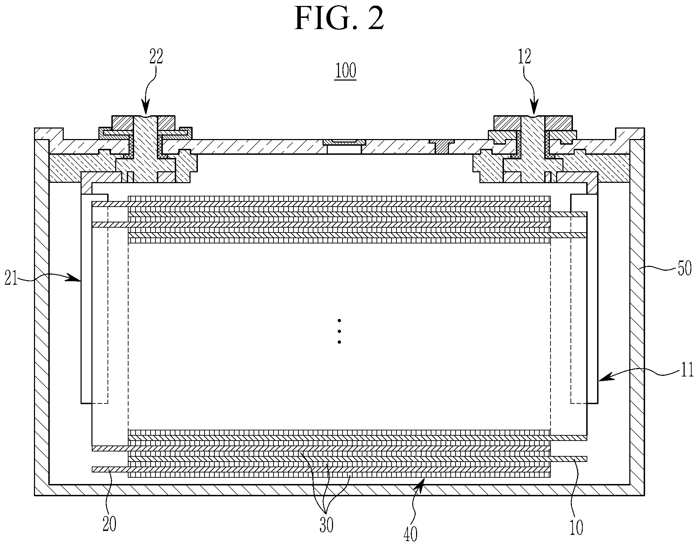

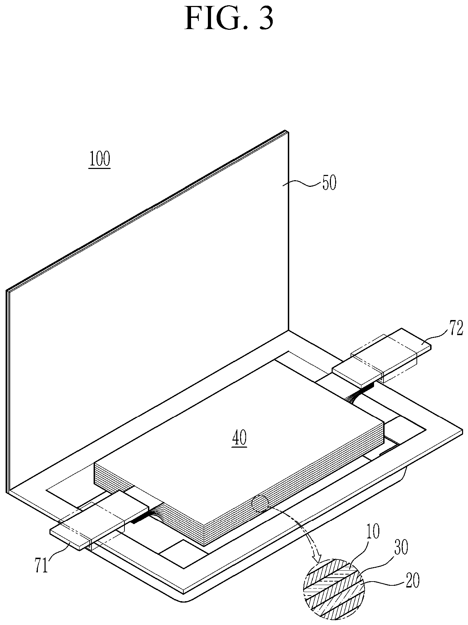

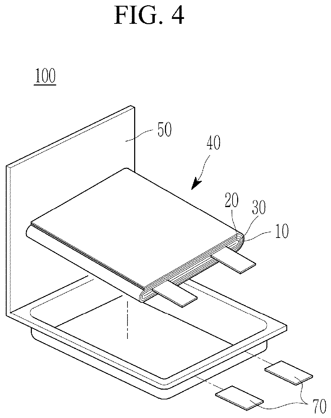

The rechargeable lithium battery may be classified into cylindrical, prismatic, pouch, or coin-type batteries, and the like depending on their shape. FIG. 1 to FIG. 4 are schematic views illustrating a rechargeable lithium battery according to an example embodiment. FIG. 1 shows a cylindrical battery, FIG. 2 shows a prismatic battery, and FIG. 3 and FIG. 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIG. 3 and FIG. 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to various examples embodiments may be usable in automobiles, mobile phones, and/or various types of electric devices, as non-limiting examples.

Hereinafter, examples of the disclosure and comparative examples are described. These examples, however, are not in any sense to be interpreted as limiting the scope of the disclosure.

### (Example 1)

Carboxymethyl cellulose was added to water to prepare a carboxymethyl cellulose aqueous solution with a concentration of 1 wt%. Dopamine was added to the carboxymethyl cellulose aqueous solution at an amount of 11 wt% based on 100 wt% of carboxymethyl cellulose.

The resulting mixture was agitated for 24 hours to prepare an aqueous solution containing an additive.

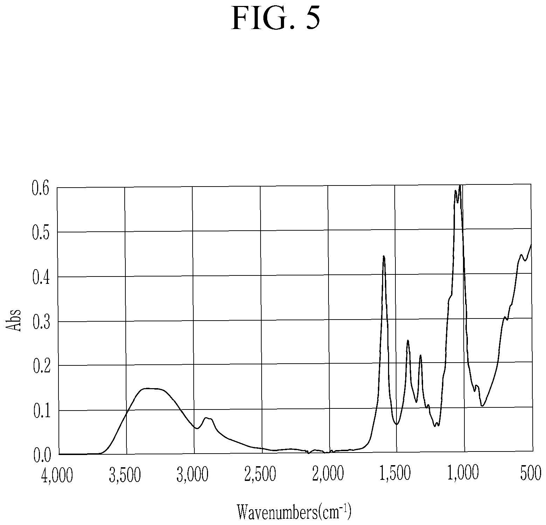

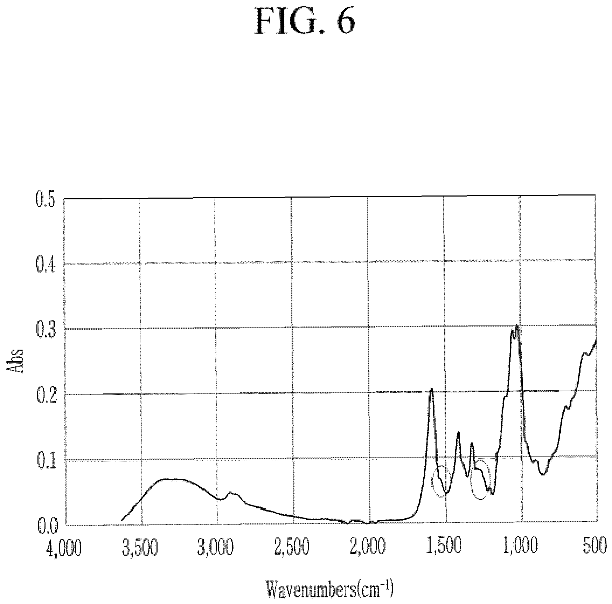

The additive was carboxymethyl cellulose and dopamine bonded via an amine group. This is confirmed from a FT-IR result of the additive shown in FIG. 6. The FT-IR result of the additive shown in FIG. 6 shows a first peak appearing at a wavelength of 1,250 cm⁻¹ to 1,350 cm⁻¹ and a second peak appearing at a wavelength of 1,470 cm⁻¹ to 1,570 cm⁻¹ (indicated by circles in FIG. 6), which is different from the FT-IR result of carboxymethyl cellulose in FIG. 5.

Thereafter, a negative electrode active material and a styrene-butadiene rubber were added to the aqueous solution containing the additive to prepare a negative electrode active material layer slurry. This addition was carried out in order to achieve an amount of carboxymethyl cellulose of 0.9 wt%, an amount of dopamine of 0.1 wt%, an amount of the negative electrode active material of 97.5 wt%, and an amount of the styrene-butadiene rubber of 1.5 wt% based on 100 wt% of the solid amount in the negative electrode active material layer slurry. The negative electrode active material included a mixed active material of 45 wt% of artificial graphite, 45 wt% of natural graphite, and 10 wt% of a silicon-carbon composite.

The silicon-carbon composite included a composite having a core including secondary particles, where nano silicon primary particles were agglomerated, and a soft carbon coating layer on a surface of the core. In the silicon-carbon composite, an amount of the nano silicon primary particles was 70 wt%, an amount of the soft carbon was 30 wt%, and a thickness of the soft carbon coating layer was 100 nm.

The negative electrode active material layer slurry was coated on a Cu foil current collector, dried, and pressurized to prepare a negative electrode including the current collector and a negative electrode active material layer formed on the current collector.

In the negative electrode, the additive was carboxymethyl cellulose, and dopamine is bonded via the amine group.

The negative electrode, a LiNi_{0.8}Co_{0.1}Al_{0.1}O₂ positive electrode, and an electrolyte were used to fabricate a full cell. The electrolyte used a mixed solvent of ethylene carbonate and dimethyl carbonate (3:7 volume ratio) in which 1 M LiPF₆ was dissolved.

### (Example 2)

Carboxymethyl cellulose was added to water to prepare a carboxymethyl cellulose aqueous solution with a concentration of 1 wt%. A negative electrode and a full cell were fabricated by the same procedure as in Example 1 discussed above, with a difference in that dopamine was added to the carboxymethyl cellulose aqueous solution at an amount of 100 wt% based on 100 wt% of carboxymethyl cellulose to prepare an aqueous solution including an additive, and in the prepared negative electrode active material layer slurry, based on 100 wt% of the solid amount, an amount of carboxymethyl cellulose was set to be 1 wt%, an amount of dopamine was set to be 1 wt%, an amount of the negative electrode active material was set to be 96.5 wt%, and an amount of the styrene-butadiene rubber was set to be 1.5 wt%.

### (Example 3)

Carboxymethyl cellulose was added to water to prepare a carboxymethyl cellulose aqueous solution with a concentration of 1.5 wt%. A negative electrode and a full cell were fabricated by the same procedure as in Example 1 discussed above, with a difference that dopamine was added to the carboxymethyl cellulose aqueous solution at an amount of 10 wt% based on 100 wt% of carboxymethyl cellulose to prepare an aqueous solution including an additive, and in the prepared negative electrode active material layer slurry, based on 100 wt% of the solid amount, an amount of carboxymethyl cellulose was set to be 1.5 wt%, an amount of dopamine was set to be 0.15 wt%, an amount of the negative electrode active material was set to be 96.85 wt%, and an amount of the styrene-butadiene rubber was set to be 1.5 wt%.

### (Example 4)

Carboxymethyl cellulose was added to water to prepare a carboxymethyl cellulose aqueous solution with a concentration of 0.5 wt%. A negative electrode and a full cell were fabricated by the same procedure as in Example 1 discussed above, with a difference that dopamine was added to the carboxymethyl cellulose aqueous solution at an amount of 20 wt% based on 100 wt% of carboxymethyl cellulose to prepare an aqueous solution including an additive, and in the prepared negative electrode active material layer slurry, based on 100 wt% of the solid amount, an amount of carboxymethyl cellulose was set to be 0.5 wt%, an amount of dopamine was set to be 0.1 wt%, an amount of the negative electrode active material was set to be 97.9 wt%, and an amount of the styrene-butadiene rubber was set to be 1.5 wt%.

### (Comparative Example 1)

Carboxymethyl cellulose was added to water to prepare a carboxymethyl cellulose aqueous solution with a concentration of 1 wt%.

97.5 wt% of the negative electrode active material used in Example 1 discussed above and 1.5 wt% of a styrene-butadiene rubber were added to the carboxymethyl cellulose aqueous solution to prepare a negative electrode active material layer slurry.

A negative electrode and a full cell were fabricated by the same procedure as in Example 3 discussed above, with a difference of using the negative electrode active material layer slurry.

### (Comparative Example 2)

97.5 wt% of the negative electrode active material used in Example 1, 0.9 wt% of carboxymethyl cellulose, 0.1 wt% of dopamine, and 1.5 wt% of a styrene-butadiene rubber were mixed in a water solvent to prepare a negative electrode active material layer slurry.

A negative electrode and a full cell were fabricated by the same procedure as in Example 1 discussed above, with a difference of using the negative electrode active material layer slurry.

### (Comparative Example 3)

A dopamine aqueous solution (concentration: 1 wt%) and the negative electrode active material used in Example 1 discussed above were mixed, and carboxymethyl cellulose and the styrene-butadiene rubber were added to the resulting mixture to prepare a negative electrode active material layer slurry.

In the prepared negative electrode active material layer slurry, based on 100 wt% of the solid amount, an amount of carboxymethyl cellulose was 0.9 wt%, an amount of dopamine was 0.1 wt%, and the amount of the negative electrode active material was 99 wt%.

A negative electrode and a full cell were fabricated by the same procedure as in Example 1 discussed above, with a difference of using the negative electrode active material layer slurry.

### (Comparative Example 4)

97.5 wt% of the negative electrode active material used in Example 1, 1.5 wt% of a styrene-butadiene rubber, and 1 wt% of carboxymethyl cellulose were added to a water solvent to prepare a negative electrode active material layer slurry.

A negative electrode was prepared by the same procedure as in Example 1, except for using the negative electrode active material layer slurry.

Dopamine was added to a mixed solvent of ethylene carbonate and dimethyl carbonate (3:7 volume ratio) in which 1M LiPF₆ was dissolved, at an amount of 0.5 wt% based on 100 wt% of the mixed solvent, to prepare an electrolyte.

Using the negative electrode, a LiNi_{0.8}Co_{0.1}Al_{0.1}O₂ positive electrode, and the electrolyte, a full cell was fabricated.

### Experimental Example 1) Evaluation of initial capacity

The half-cells according to Examples 1 to 4 and Comparative Examples 1 to 4 were once charged at 0.33 C and once discharged at 0.1 C, and discharge capacity was measured.

A ratio of the measured discharge capacity was calculated, based on the discharge capacity of Comparative Example 1 which was set to 100%. The results are shown in Table 1.

### Experimental Example 2) Evaluation of capacity retention

The half-cells according to Examples 1 to 4 and Comparative Examples 1 to 4 were charged and discharged for 100 cycles at 0.33 C charge and 0.1 C discharge. A ratio of discharge capacity at 100^{th} relative to discharge capacity at 1^{st} was calculated. The results are shown in Table 1, as capacity retention.

In Table 1, each amount of carboxymethyl cellulose (CMC) and dopamine based on 100 wt% of the negative electrode active material layer are shown.

**Table 1**

| | CMC (wt%) | Amount of dopamine (wt%) | Capacity retention (%) | Initial capacity ratio (%) |
|---|---|---|---|---|
| Example 1 | 0.9 | 0.1 | 93.6 | 99.4 |
| Example 2 | 1 | 1 | 91.5 | 106.8 |
| Example 3 | 1.5 | 0.15 | 91.7 | 105.8 |
| Example 4 | 0.5 | 0.1 | 91.5 | 102.8 |
| Comparative Example 1 | 1 | 0 | 70.8 | 100 |
| Comparative Example 2 | 0.9 | 0.1 | 90.9 | 98.1 |
| Comparative Example 3 | 0.9 | 0.1 | 90.4 | 102.0 |
| Comparative Example 4 | 1 | 0.5 (based on mixed solvent of electrolyte) | 69.8 | 102.3 |

As shown in Table 1, Examples 1 to 4 using the additive in which carboxymethyl cellulose and dopamine is chemical bonded therewith via the amine group, exhibited high initial capacity and improved capacity retention, compared to Comparative Example 1 without using dopamine.

Comparative Example 2, which used a physical mixture of carboxymethyl cellulose and dopamine, and Comparative Example 3 using dopamine coated on silicon, exhibited small or non-substantial improvements in capacity retention and initial capacity.

Comparative Example 4 in which dopamine was added to the electrolyte exhibited slightly improved initial capacity compared to Comparative Example 1, but lower capacity retention.

While examples of this disclosure are described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A negative electrode for a rechargeable lithium battery, the negative electrode comprising:
a current collector; and
a negative electrode active material layer on the current collector, and comprising a negative electrode active material and an additive in which a cellulose-based compound chemically bonds to a compound with an amine group and an OH group via the amine group.

2. The negative electrode as claimed in claim 1, wherein the compound with the amine group and the OH group comprises at least one of dopamine, norepinephrine, and serotonin.

3. The negative electrode as claimed in claim 1 or claim 2, wherein the cellulose-based compound comprises at least one of carboxymethyl cellulose, hydroxypropylmethyl cellulose, methyl cellulose, and an alkali metal salt thereof, optionally wherein the alkali metal comprises Na, K, or Li.

4. The negative electrode as claimed in any one of claims 1 to 3, wherein the negative electrode active material layer comprises at least one of polydopamine, polynorepinephrine, polyserotonin.

5. The negative electrode as claimed in any one of claims 1 to 4, wherein a mixing ratio of the cellulose-based compound and the compound with the amine group and the OH group is about 9:1 to about 5:5 by weight ratio.

6. The negative electrode as claimed in any one of claims 1 to 5, wherein an amount of the cellulose-based compound is about 0.5 wt% to about 1.5 wt% based on 100 wt% of the negative electrode active material layer.

7. The negative electrode as claimed in any one of claims 1 to 6, wherein an amount of the compound with the amine group and the OH group is about 0.1 wt% to about 1 wt% based on 100 wt% of the negative electrode active material layer.

8. The negative electrode as claimed in any one of claims 1 to 7, wherein the negative electrode active material comprises a silicon-carbon composite.

9. The negative electrode as claimed in claim 8, wherein the carbon comprises at least one of amorphous carbon, and amorphous carbon with crystalline carbon.

10. The negative electrode as claimed in claim 8 or claim 9, wherein the silicon-carbon composite comprises silicon particles and an amorphous carbon coating layer on a surface of the silicon particles.

11. The negative electrode as claimed in any one of claims 8 to 10, wherein the silicon-carbon composite comprises a core comprising silicon particles and crystalline carbon and an amorphous carbon coating layer on a surface of the core.

12. The negative electrode as claimed in any one of claims 1 to 11, wherein the additive has a first peak at a wavelength of about 1,250 cm⁻¹ to about 1,350 cm⁻¹ and a second peak at a wavelength of about 1,470 cm⁻¹ to about 1,570 cm⁻¹ in a FT-IR measurement.

13. The negative electrode as claimed in any one of claims 1 to 12, wherein the negative electrode active material layer further comprises an aqueous binder, optionally wherein the aqueous binder comprises at least one of a styrene-butadiene rubber, a (meth)acryated styrene-butadiene rubber, a (meth)acrylonitrile-butadiene rubber, a (meth)acryl rubber, a butyl rubber, a fluorine rubber, polyethyleneoxide, polyvinyl pyrrolidone, polyepichlorohydrin, polyphosphazene, poly(metha)acrylonitrile, an ethylene propylene diene copolymer, polyvinyl pyridine, chlorosulfonated polyethylene, latex, a polyester resin, a (meth)acrylic resin, a phenolic resin, an epoxy resin, and polyvinyl alcohol.

14. The negative electrode as claimed in any one of claims 1 to 13, wherein the negative electrode active material comprises a silicon-carbon composite first negative electrode active material and a crystalline carbon second negative electrode active material, optionally wherein the crystalline carbon comprises unspecified shaped, sheet shaped, flake shaped, spherical shaped, or fiber shaped natural graphite or artificial graphite, natural graphite, artificial graphite, or a combination thereof.

15. A rechargeable lithium battery, comprising:
the negative electrode of any one of claims 1 to 14;
a positive electrode; and
an electrolyte.
